# EUROPÄISCHE PATENTSCHRIFT

(11) **EP 4 107 046 B1**
(45) Veröffentlichungstag und Bekanntmachung des Hinweises auf die Patenterteilung: **13.03.2024**
(21) Anmeldenummer: 21725037.2
(22) Anmeldetag: 21.04.2021
(51) Int. Cl.: B61D 17/12

(54) **UNTERGESTELL FÜR EINEN SCHIENENFAHRZEUGWAGENKASTEN**
UNDERFRAME FOR A RAIL VEHICLE CAR BODY
CHÂSSIS POUR CAISSE DE VÉHICULE FERROVIAIRE

(30) Priorität: 29.04.2020 AT 503652020
(43) Veröffentlichungstag der Anmeldung: 28.12.2022
(73) Patentinhaber: Siemens Mobility Austria GmbH, 1210 Wien (AT)
(72) Erfinder: DIEM, Michael, 8042 Graz (AT); EGER-HÜBEL, Clemens, 1100 Wien (AT)
(74) Vertreter: Siemens Patent Attorneys
(86) Internationale Anmeldenummer: PCT/EP2021/060409
(87) Internationale Veröffentlichungsnummer: WO 2021/219464

(56) Entgegenhaltungen:
- EP-A1- 0 186 625
- WO-A1-98/08725
- WO-A1-2011/038755
- FR-A1- 2 334 552
- JP-U- S5 880 373
- US-A- 2 700 551

## Beschreibung

### Technisches Gebiet

Die Erfindung betrifft ein Untergestell für einen Schienenfahrzeugwagenkasten.

### Stand der Technik

Schienenfahrzeuge werden gemäß dem Stand der Technik aus vorgefertigten Großbaugruppen, wie Seiten- und Stirnwänden und einem Dach aufgebaut, welche mit einer weiteren Großbaugruppe, dem Untergestell verbunden werden. Das Untergestell ist zur Übermittlung der Gewichtslasten des Fahrzeugs und der Nutzlast in die Fahrwerke ausgelegt und muß in Längsrichtung die im Betrieb auftretenden Zug- und Druckkräfte zu weiteren gekuppelten Fahrzeugen übertragen. Dazu ist das Untergestell meist als gitterartige Struktur aus Längs- und Querträgern aufgebaut, wobei im Bereich der Fahrwerke meist besonders stabile Hauptquerträger angeordnet sind. Solche Strukturen sind beispielsweise aus der EP 0 186 625 A1 oder aus der WO2011/038755 A1 bekannt.

Die Längsträger sind oft als sogenannte Mittellangträger ausgebildet, wobei beispielsweise vier einzelne Langträger vorgesehen sind, welche entlang der Längserstreckung des Untergestells verlaufen. Zusätzlich sind üblicherweise längsseitig je ein Seitenlangträger vorgesehen, in welchen die Kräfte aus den Seitenwänden eingeleitet werden. Bei einer solchen Konstruktion werden die Längsträger so weit wie möglich einstückig, ununterbrochen ausgeführt und erstrecken sich somit über die gesamte Länge des Fahrzeugs, bzw. zumindest zwischen den Hauptquerträgern. Die Querträger verlaufen dabei zwischen den Seitenlangträgern quer zur Längsrichtung des Untergestells. Da die Längsträger zur Aufnahme größerer Kräfte als der Querträger ausgelegt sind, werden die Längsträger bevorzugt ununterbrochen ausgeführt und die Querträger aus einzelnen Abschnitten, welche in die Abstände zwischen den Längsträgern eingepaßt und mit dienen verbunden werden. Diese Fertigungsweise bedingt einen großen Aufwand an Hilfseinrichtungen zur exakten Positionierung der Querträger, mittels derer die Längsträger in ihrer vorgesehenen Position gehalten werden und die den Querträgerabschnitten ebenfalls ihre Montageposition vorgeben. Änderungen an einer Fahrzeugkonstruktion bedingen somit auch umfangreiche Änderungen an diesen Hilfseinrichtungen.

### Darstellung der Erfindung

Der Erfindung liegt daher die Aufgabe zugrunde, ein Untergestell anzugeben, welches schneller und einfacher aufzubauen ist als bekannte Untergestelle und wobei die Positionierung der Querträger in Bezug auf die Längsträger wesentlich vereinfacht und ohne Hilfseinrichtungen erfolgen soll.

Die Aufgabe wird durch ein Untergestell für einen Schienenfahrzeugwagenkasten mit den Merkmalen des Anspruchs 1 gelöst. Vorteilhafte Ausgestaltungen sind Gegenstand untergeordneter Ansprüche.

Dem Grundgedanken der Erfindung nach wird ein Untergestell für einen Schienenfahrzeugwagenkasten beschrieben, welches eine Mehrzahl, in Längsrichtung des Untergestells orientierter Längsträger und mindestens einem, in eingebauter Position normal zu den Längsträgern orientierten Querträger umfasst wobei die Längsträger an der Montageposition des Querträgers jeweils eine Öffnung umfassen, durch welche der Querträger durchsteckbar ist.

Dadurch ist der Vorteil erzielbar, die Querträger ungeteilt, einstückig ausführen zu können, sowie deren Montageposition durch die Positionierung der Öffnungen in den Längsträgern vorgeben zu können, wozu keine weiteren Hilfseinrichtungen mehr erforderlich sind.

Erfindungsgemäß wird eine gitterartige Struktur aus Längsund Querträgern aufgebaut, bei welcher die Querträger die Längsträger an vorgegebenen Positionen durchdringen. Dabei werden die Öffnungen in den Längsträgern so ausgeführt, dass ein Querträger nur in einer bestimmten Lage, insbesondere einer von seiner Montageendposition abweichenden Lage durch die Öffnungen durchschiebbar ist und in weiterer Folge in diesen Öffnungen in seine Montageendposition gedreht werden kann. Solcherart können die Öffnungen in den Längsträgern kleiner gestaltet werden, sodass die Festigkeit der Längsträger nicht übermäßig geschwächt wird.

Weiters ist es vorteilhaft, die Querträger mit Ausnehmungen auszustatten, welche während der Drehvorgangs zur Erreichung der Montageendposition mit dem Längsträger in Eingriff geraten und nach Abschluß dieses Drehvorgangs eine formschlüssige Verbindung zwischen dem Längs- und dem Querträger herstellen. Diese Ausnehmungen geben dabei auch die relative Lage der Längsträger zueinander in Querrichtung des Untergestells vor, sodass auch zum Ausrichten der Längsträger bei Beginn des Montagevorgangs keine Hilfseinrichtungen erforderlich sind. Die Abstände der Ausnehmungen an den Querträgern bestimmen somit die Abstände der Längsträger zueinander.

In weiterer Folge können die Längsträger mit den Querträgern an den jeweiligen Kreuzungsstellen miteinander unlösbar verbunden werden, wozu ein Schweißverfahren eingesetzt wird.

Die Querträger und die Längsträger sind vorzugsweise aus Metall zu fertigen, insbesondere ist es vorteilhaft, sie aus gebogenem Metallblech mit U- oder Z-förmigen Querschnitt herzustellen, da diese Formen eine hohe Festigkeit bei geringer Masse aufweisen. Die Fertigung aus Metallblech ermöglicht auch die einfache und kostengünstige Herstellung der Ausnehmungen in den Längsträgern und der Nuten in den Querträgern.

### Kurzbeschreibung der Zeichnungen

Es zeigen beispielhaft:
**Fig.1** Untergestell, erster Montageschritt.
**Fig.2** Untergestell, zweiter Montageschritt.
**Fig.3** Untergestell, dritter Montageschritt.
**Fig.4** Untergestell mit Seitenlangträger.
**Fig.5** Ausnehmung mit Querträger.
**Fig.6** Ausnehmung mit Querträger in Montageendposition.
**Fig.7** Untergestell, Detailansicht.

### Ausführung der Erfindung

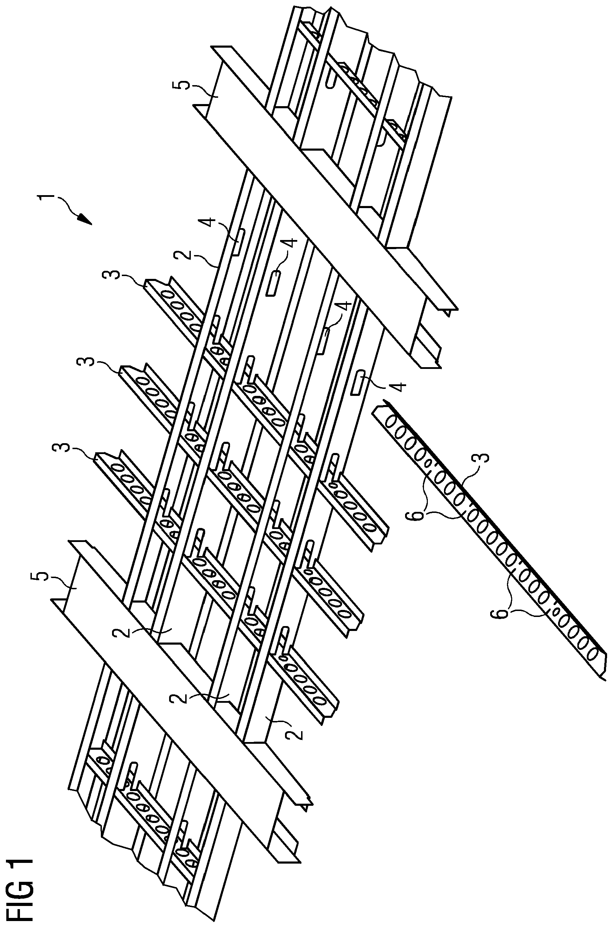

**Fig.1** zeigt beispielhaft und schematisch ein Untergestell bei einem ersten Montageschritt eines Querträgers. Es ist ein Abschnitt eines Untergestells 1 dargestellt, welches als typische Gitterstruktur aus Längsträgern 2, Querträgern 3 und zwei Hauptquerträgern 5 aufgebaut ist. Es ist der Abschnitt zwischen den beiden Hauptquerträgern 5 gezeigt, in welchem vier Längsträger 2 parallel zwischen den Hauptquerträgern 5 in Längsrichtung des Untergestells 1 verlaufen. In diesem Abschnitt sind vier Querträger 3 angeordnet, welche normal zur Längsrichtung des Untergestells 1 verlaufen. Drei der Querträger 3 befinden sich in ihrer Montageendposition, ein Querträger 3 ist neben dem Untergestell 1 befindlich und bereit in seine Endmontageposition gebracht zu werden. Die Längsträger 2 sind mit Ausnehmungen 4 ausgestattet, durch welche ein Querträger 3 durchschiebbar ist. Diese Ausnehmungen 4 sind so bemessen, dass ein Querträger 3 nur in gegenüber der Montageendposition verdrehter Lage in die Ausnehmung 4 einbringbar ist. Die Querträger 3 weisen Nuten 6 in Form von länglichen Vertiefungen auf, welche zum Eingriff in die Längsträger 2 ausgebildet sind. Die Abstände der Nuten 6 entsprechen dabei dem vorgesehenen Anstand zwischen den Längsträgern 2, sodass sie bei der Montage der Querträger 3 gleichzeitig auch die Abstände der Längsträger 2 zueinander festlegen. Dadurch können besondere Hilfseinrichtungen zur exakten Ausrichtung und Beabstandung der Längsträger 2 entfallen.

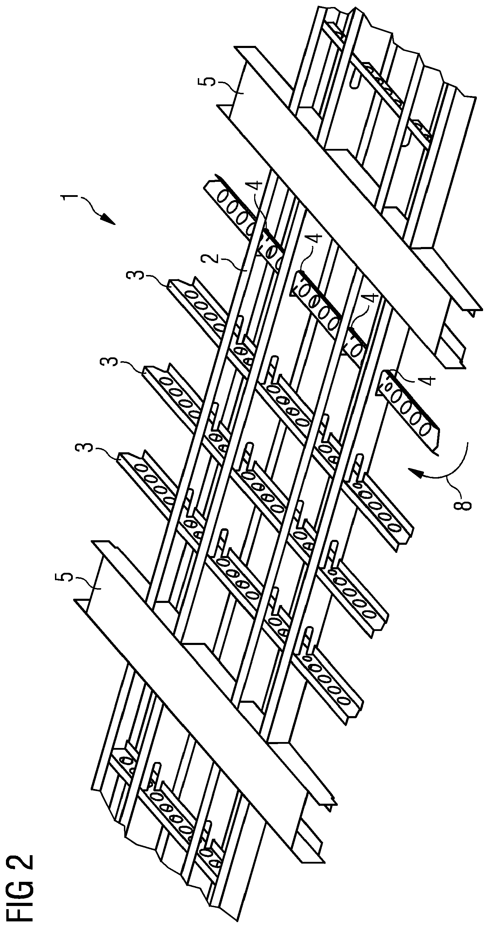

**Fig.2** zeigt beispielhaft und schematisch ein Untergestell bei einem zweiten Montageschritt eines Querträgers. Es ist das Untergestell 1 aus Fig.1 dargestellt, wobei der in Fig.1 außerhalb des Untergestells 1 befindliche Querträger 3 jetzt in die Ausnehmungen 4 der Längsträger 2 eingebracht ist. Die Ausnehmungen 4 sind so geformt, dass eine möglichst geringe Schwächung der Festigkeit der Längsträger 2 auftritt, dabei weisen sie eine solche Umrisslinie auf, dass der Längsträger 3 nur in einer gegenüber seiner Montageendposition verdrehter Lage eingebracht werden kann. Mittels einer Drehbewegung 8 wird ein so eingebrachter Querträger 3 in weiterer Folge in seine Montageendposition gebracht. Gleichzeitig mit dieser Drehbewegung 8 greifen die Nuten 6 in die Längsträger 2 ein.

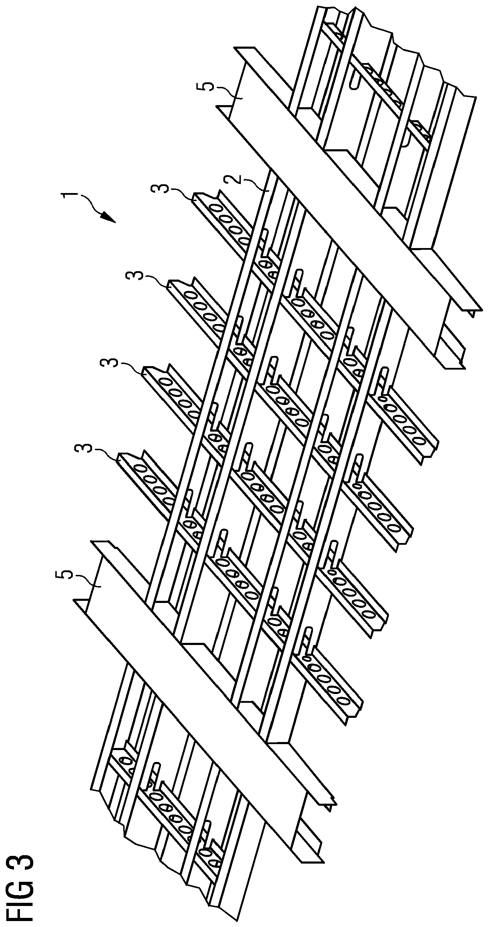

**Fig.3** zeigt beispielhaft und schematisch ein Untergestell bei einem dritten Montageschritt eines Querträgers. Bei diesem dritten Montageschritt ist der Querträger 3 in seine Montageendposition gedreht und formschlüssig mit den Längsträgern verbunden. Somit ist die relative Lage der Längsträger 2 zu den Querträgern 3 gegeben und die genannten Bauteile können fest miteinander verbunden werden, wozu zweckmäßigerweise ein Schweißverfahren einzusetzen ist.

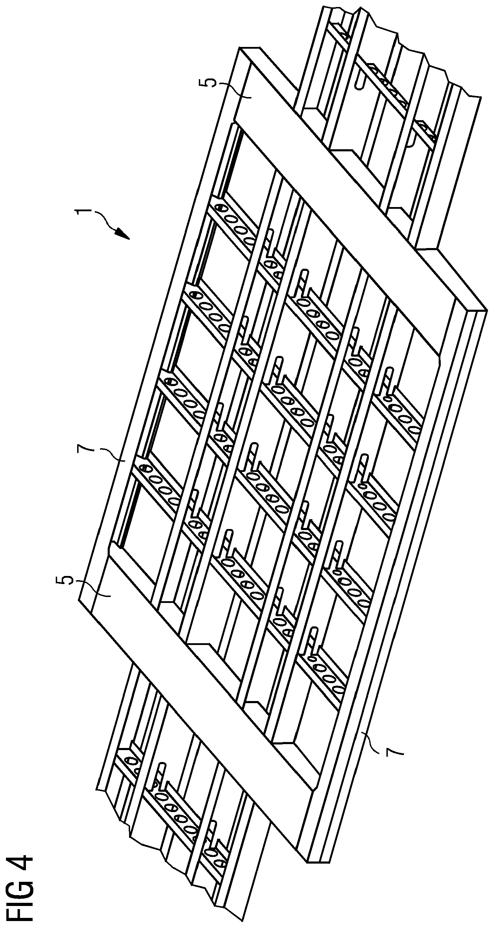

**Fig.4** zeigt beispielhaft und schematisch Untergestell mit Seitenlangträgern. In weiterer Fortführung der Herstellung eines Untergestells, wie in den Fig.1 bis 3 gezeigt, kann der Einsatz von Seitenlangträgern 7 vorgesehen werden. Diese Seitenlangträger 7 erhöhen die Stabilität der Untergestells 1 und erleichtern die weitere Montage eines auf dem Untergestell 1 basierenden Wagenkastens, insbesondere durch Vereinfachung der Montage von Seitenwänden. In gezeigtem Ausführungsbeispiel verlaufen die Seitenlangträger 7 entlang der seitlichen Begrenzung des Untergestells 1 zwischen den beiden Hauptquerträgern 5 und verbinden die Enden der Querträger 3.

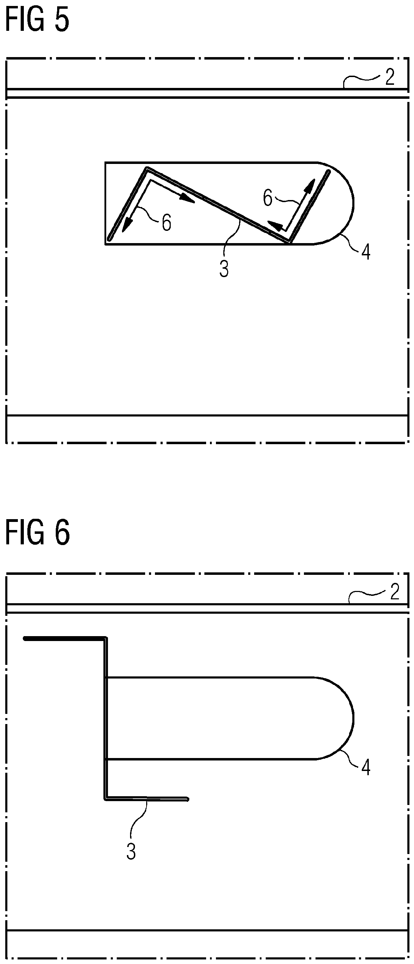

**Fig.5** zeigt beispielhaft und schematisch eine Ausnehmung mit einem Querträger. Es ist eine Ansicht auf einen Längsträger 2 mit einer Ausnehmung 4 dargestellt, wobei ein Querträger 3 in diese Ausnehmung 4 eingebracht ist. Der Querträger 3 ist als Metallprofil mit z-förmigen Querschnitt ausgebildet und mit Nuten 6 ausgestattet. Der Schnitt durch den Querträger 3 ist durch eine Nut 6 gezeigt, wobei die Tiefe dieser länglichen Einkerbung ersichtlich ist.

**Fig.6** zeigt beispielhaft und schematisch eine Ausnehmung mit einem Querträger in Montageendposition. Es ist das Beispiel aus Fig.5 dargestellt, wobei der Querträger 3 in seine Montageendposition gedreht ist. Die Nuten 6 greifen in den Steg des Längsträgers 2 ein und stellen eine formschlüssige Verbindung mit diesem her.

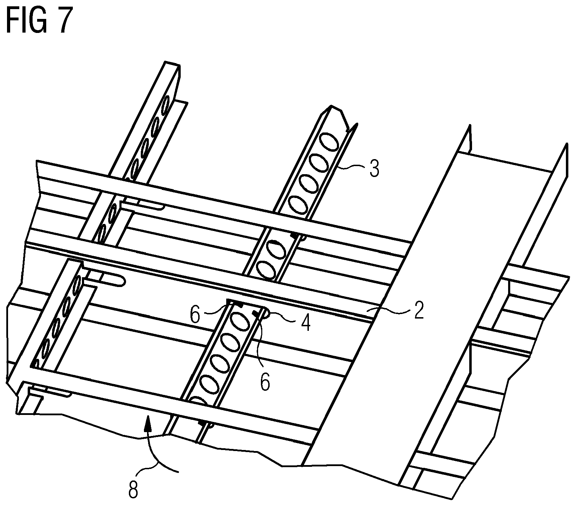

**Fig.7** zeigt beispielhaft und schematisch ein Untergestell in einer Detailansicht. Es ist das Untergestell1 aus den Fig.1 bis 4 in einer detaillierten Sicht auf eine Kreuzungsstelle zwischen einem Längsträger 2 und einem Querträger 3 dargestellt, wobei der Querträger 3 noch mittels einer Drehbewegung 8 in seine Montageendposition zu bewegen ist.

### Liste der Bezeichnungen

- 1: Untergestell
- 2: Längsträger
- 3: Querträger
- 4: Ausnehmung
- 5: Hauptquerträger
- 6: Nut
- 7: Außenlängsträger
- 8: Drehbewegung

## Patentansprüche

1. Untergestell (1) für einen Schienenfahrzeugwagenkasten, umfassend eine Mehrzahl, in Längsrichtung des Untergestells (1) orientierter Längsträger (2) und mindestens einen, in eingebauter Position normal zu den Längsträgern orientierten Querträger (3), wobei die Längsträger (2) an der Montageposition des Querträgers (3) jeweils eine Öffnung (4) umfassen, durch welche der Querträger (3) durchsteckbar ist,
**dadurch gekennzeichnet, dass**
der Querträger (3) in den Öffnungen (4) um seine Längsachse drehbar ist, wobei der Querträger (3) sich nach dem Abschluß der Drehbewegung (8) in seiner Montageendposition befindet, und
die Längsträger (2) an den Kreuzungsstellen mit dem Querträger (3) mit diesem Querträger (3) mittels eines Schweißverfahrens verbunden sind.

2. Untergestell (1) für einen Schienenfahrzeugwagenkasten nach Anspruch 1,
**dadurch gekennzeichnet, dass** der Querträger (3) Nuten (6) umfasst, welche in seiner Montageendposition formschlüssig mit den Längsträgern (2) verbunden sind.

3. Untergestell (1) für einen Schienenfahrzeugwagenkasten nach einem der Ansprüche 1 oder 2,
**dadurch gekennzeichnet, dass** der Querträger (3) als Metallprofil mit z-förmigen Querschnitt ausgebildet ist.

4. Untergestell (1) für einen Schienenfahrzeugwagenkasten nach einem der Ansprüche 1 bis 3,
**dadurch gekennzeichnet, dass** eine Mehrzahl von Querträgern (3) vorgesehen ist, welche sich über die Breite des Untergestells (1) erstrecken, wobei die Enden der Querträger (3) auf jeder Seite mit einem Seitenlangträger (7) verbunden sind.

## Claims

1. Underframe (1) for a rail vehicle wagon body, comprising a plurality of longitudinal beams (2), which are oriented in the longitudinal direction of the underframe (1), and at least one crossmember (3) which is oriented perpendicularly with respect to the longitudinal beams in the installed position, the longitudinal beams (2) comprising in each case one opening (4) at the mounting position of the crossmember (3), through which opening (4) the crossmember (3) can be plugged,
**characterized in that**
the crossmember (3) can be rotated in the openings (4) about its longitudinal axis, the crossmember (3) being situated in its final mounting position after the termination of the rotational movement (8), and
the longitudinal beams (2) are connected to the crossmember (3) at the intersections to this crossmember (3) by means of a welding method.

2. Underframe (1) for a rail vehicle wagon body according to Claim 1,
**characterized in that** the crossmember (3) comprises grooves (6) which are connected in a positively locking manner to the longitudinal beams (2) in its final mounting position.

3. Underframe (1) for a rail vehicle wagon body according to either of Claims 1 or 2,
**characterized in that** the crossmember (3) is configured as a metal profile with a z-shaped cross section.

4. Underframe (1) for a rail vehicle wagon body according to one of Claims 1 to 3,
**characterized in that** a plurality of crossmembers (3) are provided which extend over the width of the underframe (1), the ends of the crossmembers (3) being connected on each side to a side longitudinal beam (7).

## Revendications

1. Châssis (1) destiné à un wagon de véhicule ferroviaire, comprenant une pluralité de longerons (2) orientés dans la direction longitudinale du châssis (1) et au moins une traverse (3) orientée, en position montée, perpendiculairement aux longerons, les longerons (2) comprenant chacun, à la position de montage de la traverse (3), une ouverture (4) à travers laquelle la traverse (3) peut être encastrée,
**caractérisé en ce que**
la traverse (3) peut tourner autour de son axe longitudinal dans les ouvertures (4), la traverse (3) se trouvant dans sa position finale de montage après l'achèvement du mouvement de rotation (8), et
les longerons (2) sont reliés, aux points de croisement avec la traverse (3), à cette traverse (3) au moyen d'un procédé de soudage.

2. Châssis (1) destiné à un wagon de véhicule ferroviaire selon la revendication 1,
**caractérisé en ce que** la traverse (3) comprend des rainures (6) qui, dans sa position finale de montage, sont reliées par complémentarité de forme aux longerons (2).

3. Châssis (1) destiné à un wagon de véhicule ferroviaire selon l'une des revendications 1 ou 2,
**caractérisé en ce que** la traverse (3) est conçue sous la forme d'un profilé métallique ayant une section transversale en forme de Z.

4. Châssis (1) destiné à un wagon de véhicule ferroviaire selon l'une quelconque des revendications 1 à 3,
**caractérisé en ce qu'**il est prévu une pluralité de traverses (3) qui s'étendent sur la largeur du châssis (1), les extrémités des traverses (3) étant reliées de chaque côté à un longeron latéral (7).
